# EUROPÄISCHE PATENTSCHRIFT

(11) **EP 2 315 814 B1**
(45) Veröffentlichungstag und Bekanntmachung des Hinweises auf die Patenterteilung: **29.02.2012**
(21) Anmeldenummer: 09777259.4
(22) Anmeldetag: 17.07.2009
(51) Int. Cl.: C09D 7/02, C09D 11/00, C09B 67/00, C09D 17/00

(54) **TROCKENE PIGMENTPRÄPARATIONEN MIT NICHTIONISCHEN ADDITIVEN**
DRY PIGMENT PREPARATIONS COMPRISING NON-IONIC ADDITIVES
PRÉPARATIONS DE PIGMENTS SECS AVEC DES ADDITIFS NON IONIQUES

(30) Priorität: 16.08.2008 DE 102008038070
(43) Veröffentlichungstag der Anmeldung: 04.05.2011
(73) Patentinhaber: Clariant Finance (BVI) Limited, Road Town, Tortola (VG)
(72) Erfinder: FECHNER, Björn, 24647 Wasbek (DE); SCHAEFER, Carsten, 84453 Mühldorf (DE); WÖRNDLE, Alexander, 60313 Frankfurt am Main (DE); BECK, Dietmar, 65929 Frankfurt am Main (DE)
(74) Vertreter: Hütter, Klaus
(86) Internationale Anmeldenummer: PCT/EP2009/005202
(87) Internationale Veröffentlichungsnummer: WO 2010/020317

(56) Entgegenhaltungen:
- EP-A- 1 323 789
- EP-A- 1 760 122
- EP-A- 1 878 774
- EP-A- 1 908 806
- EP-A2- 0 392 567
- WO-A-2008/138487
- US-A1- 2006 256 175

## Beschreibung

Gegenstand der vorliegenden Erfindung sind trockene Pigmentpräparationen enthaltend neuartige nichtionische Polymere als Dispergiermittel, sowie ihre Verwendung zum Einfärben von natürlichen und synthetischen Materialien.

Ein neuer Trend ist es, trockene universell verträgliche Pigmentpräparationen anzubieten. Diese werden durch Trocknung von flüssigen Dispersionen hergestellt. Für die Dispergierung von Pigmenten im flüssigen Medium sind üblicherweise Dispergiermittel notwendig. Diese Dispergiermittel, unterstützt durch geeignete Tenside, auch Benetzer genannt, fördern als oberflächenaktive Mittel die Benetzung der zu dispergierenden Pigmente und erleichtern das Aufbrechen von Agglomeraten und Aggregaten bei der Herstellung der Pigmentdispersion, welches in der Regel mit Hilfe einer Mahlung bewerkstelligt wird. Dispergiermittel können anionischer, kationischer, amphoterer oder neutraler Struktur sein. Sie können niedermolekularer Natur sein oder höhermolekulare Polymere darstellen, die eine statistische, alternierende, blockartige, kammartige oder sternförmig angeordnete Architektur der polymerisierten Monomere ausbilden. Von besonderer kommerzieller Bedeutung sind Dispergiermittel beispielsweise für die Dispergierung von Pigmenten bei der Herstellung von Pigmentkonzentraten, die zum Einfärben von Dispersions- und Lackfarben, Anstrichmitteln, Beschichtungsstoffen und Druckfarben verwendet werden, sowie zum Einfärben von Papier, Kartonagen und Textilien. Um den Markt und seinen Trend nach trockenen Präparationen zu bedienen, sind neuerdings Dispergiermittel und Additive gesucht, die nach einem Trocknungsprozess der flüssigen Dispersion eine schnelle Auflösung des trockenen Pulvers oder Granulates in dem Applikationsmedium sicherstellen. Hierzu können sich Kammpolymere eignen. Kammpolymere werden meist unter Verwendung von Makromonomeren auf Basis von Mono(meth)acrylsäureestern als Comonomere hergestellt und unterscheiden sich von anderen polymeren Dispergiermitteln dadurch, dass sie eine klar geordnete Struktur aufweisen, da Hydrophobie und Hydrophilie bzw. Polarität auf die Haupt- und die Seitenketten aufgeteilt werden kann.

In EP 1 293 523 wird ein Dispergiermittel beschrieben, welches ein Polymer ist, das ein gewichtsgemitteltes Molekülgewicht von etwa 5.000 bis 100.000 aufweist und 20 bis 80 Gew.-% eines hydrophilen Rückgrats und 80 bis 20 Gew.-% makromonomerer Seitenketten umfasst. Das Rückgrat besteht, bezogen auf das Gewicht des Rückgrats, zu 70 bis 98 Gew.-% aus polymerisierten ethylenisch ungesättigten Monomeren, die keine Carboxylgruppen enthalten, sowie zu 2 bis 30 Gew.-% aus polymerisierten ethylenisch ungesättigten Monomeren, die eine Carboxylgruppe tragen, wobei zumindest 10 % der Carboxylgruppen mit einem Amin oder einer anorganischen Base neutralisiert sind. Das Rückgrat weist im Vergleich zu den Seitenketten hydrophile Eigenschaften auf. Die Seitenketten bestehen aus Makromonomeren polymerisierter ethylenisch ungesättigter Monomere.

In EP 1 081 169 werden verzweigte Polymere beschrieben, die sich aus folgender Monomerenmischung ableiten:
(A) 50 bis 93 Gew.-% wenigstens eines ethylenisch ungesättigten Monomers,
(B) 2 bis 25 Gew.-% wenigstens eines ethylenisch ungesättigten Makromonomers mit einem Molekülgewicht von 1.000 bis 20.000, und
(C) 5 bis 25 Gew.-% wenigstens eines polymerisierbaren Imidazolderivats.

EP 1 562 696 beschreibt in wässriger Emulsionspolymerisation hergestellte polymere Dispergiermittel, welche mit Makromonomeren synthetisiert werden, die aus Polyalkylenglykol-Mono(meth)acrylaten bestehen. Die Hauptkette des Polymers muss ethylenisch ungesättigte Monomere mit mindestens einer Aminogruppe enthalten.

In DE 10 2005 019 384 werden Kammpolymere beschrieben, die aus ethylenisch ungesättigten Monomeren wie Alkyl(meth)acrylaten und Aryl(meth)acrylaten in Kombination mit einem reinen Polyethylenglykol-Mono(meth)acrylat synthetisiert werden, und als Dispergiermittel verwendet werden.

EP 1 323 789 beschreibt kammartige Polymere, die Polyalkylenoxid-Mono(meth)acrylat-Bausteine enthalten, jedoch nicht wasserlöslich sind. Ziel ist es, wässrige Tinten herzustellen. Analog dazu steht EP 1 491 598, enthaltend Polyalkylenoxid-Mono(meth)acrylat-Bausteine und salzbildende Monomere; die Polymere werden für wässrige Tinten verwendet.

Die angeführten Patente beschreiben den Stand der Technik, kammförmige oder blockbildende Polymere als Dispergiermittel bereitzustellen. Die durch die Trocknung resultierenden Pulver oder Granulate sind jedoch entweder nur im wässrigen oder nur im lösungsmittelhaltigen System leicht einrührbar. Keine bisher beschriebene Erfindung ist in der Lage, Dispergiermittel aufzuzeigen, die wässrige Pigmentdispersionen gut stabilisieren, wobei sich anschließend die Dispersionen gut trocknen lassen, beispielsweise durch eine Sprühtrocknung, und hierdurch ein Pulver oder Granulat ergeben, das in wässrige und in lösungsmittelhaltige Systeme leicht einrührbar ist, mit schneller und hoher Farbstärkeentwicklung. Der entscheidende Vorteil ist hier die universelle Dispergierbarkeit des Pulvers oder Granulates in wässrigen und lösungsmittelhaltigen Systemen.

Überraschenderweise wurde gefunden, dass spezielle nichtionische Kammcopolymere, die mit Hilfe von Makromonomeren aus Polyethylen/Polypropylenglykol-Mono(meth)acrylsäureestern hergestellt werden, die beschriebene Aufgabe erfüllen, nämlich trockene Pigmentpräparationen darzustellen, die die Forderung nach universeller Dispergierbarkeit erfüllen. Unter "trocken" wird ein rieselfähiges Pulver oder Granulat verstanden.

Gegenstand der vorliegenden Erfindung sind Pigmentpräparationen, enthaltend
(i) mindestens ein organisches und/oder anorganisches Pigment,
(ii) ein Dispergiermittel, erhältlich durch Polymerisation der Monomere [A], [B], [C] und [D], wobei
   [A] ein Monomer der Formel (I) 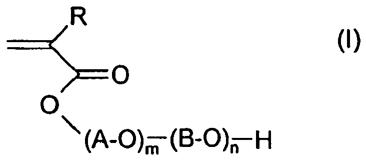 wobei
      (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten, stehen wobei der molare Anteil der Ethylenoxid-Einheiten 50 bis 98 %, insbesondere 60 bis 95 %, besonders bevorzugt 70 bis 95 %, bezogen auf die Summe (100 %) der Ethylenoxid- und Propylenoxid-Einheiten, beträgt;
      - R: für Wasserstoff oder Methyl steht,
      - m: eine Zahl von 1 bis 500, vorzugsweise 1 bis 50, ist;
      - n: eine Zahl von 1 bis 500, vorzugsweise 1 bis 50, ist,
      wobei die Summe m + n gleich 2 bis 1000 ist;
   [B] ein Monomer der Formel (II) 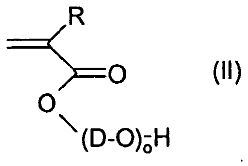 wobei
      - D: für C₃-Alkylen und
      - R: für Wasserstoff oder Methyl steht,
      - o: eine Zahl von 2 bis 500, vorzugsweise 2 bis 100, insbesondere 2 bis 50,
      besonders bevorzugt 5 bis 25, ist;
   [C] ein ethylenisch ungesättigtes Monomer ist, das eine aromatische Gruppe enthält; und sich durch die Formel (IIIa) oder (IIIb) beschreibt: 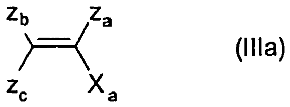 wobei
      - Xₐ: für einen aromatischen oder araliphatischen Rest mit 3 bis 30 C-Atomen steht, der gegebenenfalls eines oder mehrere, z. B. 1, 2 oder 3, Heteroatome N, O und S enthält,
      - Zₐ: für H oder (C₁-C₄)-Alkyl steht,
      - Z_{b}: für H oder (C₁-C₄)-Alkyl steht, und
      - Z_{c}: für H oder (C₁-C₄)-Alkyl steht; 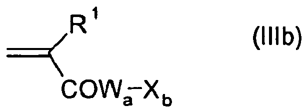
      wobei
      - R¹: für Wasserstoff oder Methyl steht,
      - X_{b}: für einen aromatischen oder araliphatischen Rest mit 3 bis 30 C-Atomen steht, der gegebenenfalls eines oder mehrere, z.B. 1, 2 oder 3, der Heteroatome N, O und S enthält,
      - Wₐ: für Sauerstoff oder die Gruppe NH steht;
   [D] ein ethylenisch ungesättigtes Monomer ist, das einen Alkylrest enthält und sich durch die Formel (IV) beschreibt: 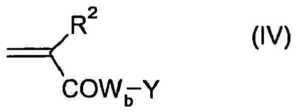 wobei
      - R²: für Wasserstoff oder Methyl steht,
      - Y: für einen aliphatischen Kohlenwasserstoffrest mit 1 bis 30 C-Atomen, vorzugsweise 6 bis 30, insbesondere 9 bis 20 C-Atomen, steht, der linear oder verzweigt, oder auch cyclisch sein kann, und die Heteroatome O, N und/oder S enthalten kann und auch ungesättigt sein kann,
      - W_{b}: für Sauerstoff oder die Gruppe NH steht.
   Weitere Komponenten können sein:
(iii) Benetzer,
(iv) weitere Tenside und/oder Dispergiermittel,
(v) weitere zur Herstellung wässriger Pigmentdispersionen übliche Zusatzstoffe.

Bevorzugte Pigmentpräparationen enthalten im trockenen Zustand 30 bis 90 Gew.-%, beispielsweise 50 bis 85 Gew.-%, an Komponente (i). Bevorzugte Pigmentpräparationen enthalten im trockenen Zustand 0,1 bis 30 Gew.-%, beispielsweise 5 bis 30 Gew.-%, an Komponente (ii). Besonders bevorzugte Pigmentpräparationen enthalten an Komponente
(i) 60 bis 85 Gew.-%, beispielsweise 70 bis 80 Gew.-%,
(ii) 10 bis 30 Gew.-%, beispielsweise 10 bis 25 Gew.-%,
(iii) 0 bis 10 Gew.-%, beispielsweise 0,1 bis 2 Gew.-%,
(iv) 0 bis 20 Gew.-%, beispielsweise 1 bis 20 Gew.-%,
(v) 0 bis 20 Gew.-%, beispielsweise 1 bis 10 Gew.-%,
jeweils bezogen auf das Gesamtgewicht (100 Gew.-%) der trockenen Pigmentpräparation.

Im Falle dass eine oder mehrere der Komponenten (iii), (iv) und (v) vorhanden sind, beträgt deren Minimalkonzentration unabhängig voneinander zweckmäßigerweise mindestens 0,01 Gew.-%, bevorzugt mindestens 0,1 Gew.-%, bezogen auf das Gesamtgewicht der trockenen Pigmentpräparation.

Die Komponente (i) der erfindungsgemäßen Pigmentpräparation ist ein feinteiliges organisches oder anorganisches Pigment oder ein Gemisch verschiedener organischer und/oder anorganischer Pigmente. Die Komponente (i) kann auch ein Farbstoff sein, der in bestimmten Lösemitteln löslich ist und in anderen Lösemitteln Pigmentcharakter hat.
Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht. Von den genannten organischen Pigmenten sind diejenigen besonders geeignet, die für die Herstellung der Präparationen möglichst feinteilig sind, wobei bevorzugt 95 % und besonders bevorzugt 99 % der Pigmentpartikel eine Teilchengröße ≤ 500 nm besitzen.

Als beispielhafte Auswahl besonders bevorzugter organischer Pigmente sind dabei Rußpigmente, wie z. B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81, zu nennen. Ferner eignen sich verlackte Farbstoffe wie Ca-, Mg-, Al-Lacke von sulfonsäure-und/oder carbonsäuregruppenhaltigen Farbstoffen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Anstelle von Pigmentdispersionen lassen sich auch Dispersionen herstellen, die als Feststoffe beispielsweise natürliche feinteilige Erze, Mineralien, schwer- oder unlösliche Salze, Wachs- oder Kunststoffteilchen, Farbstoffe, Pflanzenschutz- und Schädlingsbekämpfungsmittel, UV-Absorber, optische Aufheller und Polymerisationsstabilisatoren enthalten.

Die Copolymere (Komponente ii) besitzen ein Molekulargewicht von 10³ g/mol bis 10⁹ g/mol, besonders bevorzugt von 10³ bis 10⁷ g/mol, insbesondere bevorzugt 10³ bis 10⁵ g/mol.
Diese Polymere können durch radikalische Polymerisation der oben beschriebenen Monomere [A], [B], [C] und [D] hergestellt werden. Das Herstellungsverfahren ist in der DE 10 2008 038 072 beschrieben.

Die Copolymere besitzen übliche endständige Gruppen, welche durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine schwefelhaltige Gruppe aus einem Kettenübertragungsreagenz.

In den Copolymeren beträgt der molare Anteil der Monomere bevorzugt 0,1 bis 90 % für das Monomer [A], 0,1 bis 90 % für das Monomer [B], 0,1 bis 90 % für das Monomer [C] und 0,1 bis 90 % für das Monomer [D], wobei die Summe der molaren Anteile 100 % ergibt.
Besonders bevorzugt liegt der molare Anteil der Monomere bei 0,1 bis 70 % für Monomer [A], bei 10 bis 80 % für Monomer [B], bei 0,1 bis 50 % für Monomer [C] und bei 0,1 bis 50 % für das Monomer [D].

Die Alkylenoxideinheiten (A-O)ₘ und (B-O)ₙ des Monomeren [A] können entweder statistisch oder im Falle einer bevorzugten Ausführungsform blockartig angeordnet vorliegen.

Die Summe der Alkylenoxideinheiten kann prinzipiell n + m = 2 bis 1000 sein, bevorzugt ist 2 bis 500, insbesondere 2 bis 100, besonders bevorzugt 5 bis 50.

Zu den Monomeren [C] gehören beispielsweise die folgenden Ester und Amide der Acrylsäure und Methacrylsäure: Phenyl, Benzyl, Tolyl, 2-Phenoxyethyl, Phenethyl.
Weitere Monomere [C] sind vinylaromatische Monomere wie Styrol und seine Derivate wie beispielsweise Vinyltoluol, alpha-Methylstyrol. Bei der aromatischen Einheit kann es sich auch um Heteroaromaten handeln, wie z. B. in 1-Vinylimidazol.
Besonders bevorzugte Monomere [C] können sein: Styrol, 1-Vinylimidazol, Benzylmethacrylat, 2-Phenoxyethylmethacrylat und Phenethylmethacrylat.

Zu den Monomeren [D] gehören beispielsweise die folgenden Ester und Amide der Acrylsäure und Methacrylsäure: Methyl-, Ethyl-, Propyl-, Isopropyl-, n-Butyl-, Isobutyl-, t-Butyl-, Pentyl-, Hexyl-, 2-Ethylhexyl-, 3,3-Dimethylbutyl-, Heptyl-, Oktyl-, Isooctyl-, Nonyl-, Lauryl-, Cetyl-, Stearyl-, Behenyl-, Cyclohexyl-, Trimethylcyclohexyl-, t-Butylcyclohexyl-, Bornyl-, Isobornyl-, Adamantyl-, (2,2-Dimethyl-1-methyl)propyl-, Cyclopentyl-, 4-Ethyl-cyclohexyl-, 2-Ethoxyethyl-, Tetrahydrofurfuryl- und Tetrahydropyranyl.

Bevorzugte Monomere [D] sind die folgenden Alkyl-Ester bzw. Alkyl-Amide der Acrylsäure und Methacrylsäure: Methyl-, Ethyl-, Propyl-, Butyl-, Isobutyl-, 2-Ethoxyethyl-, Myristyl-, Octadecyl- und besonders bevorzugt 2-Ethylhexyl- und Lauryl-.

Als Komponente (iii) werden meist kationische, anionische, amphotere oder nicht ionogene Verbindungen verwendet, die die Pigmentbenetzung fördern (Netzmittel, Benetzer), beispielsweise Alkylsulfate wie z. B. Laurylsulfat, Alkylbenzolsulfonsäure, kurzkettige Alkoxylierungsprodukte wie z. B. Laurylalkohol umgesetzt mit etwa 5 Mol Ethylenoxid oder Alkindiole.

Als Komponente (iv) der erfindungsgemäßen Pigmentpräparationen dienen übliche, zur Herstellung wässeriger Pigmentdispersionen geeignete Dispergiermittel und Tenside oder Gemische solcher Substanzen. Üblicherweise werden anionische, kationische, amphotere oder nichtionische grenzflächenaktive Verbindungen verwendet.

Als Komponente (v) werden beispielsweise Verdicker, Konservierungsmittel, Viskositätsstabilisatoren, Mahlhilfsmittel und Füllstoffe eingesetzt. Weitere übliche Zusatzstoffe können Antiabsetzmittel, Lichtschutzmittel, Antioxidantien, Entgaser/Entschäumer, schaumreduzierende Mittel sein, Antibackmittel sowie Additive, welche die Viskosität und Rheologie günstig beeinflussen. Als Mittel zur Regulierung der Viskosität kommen z. B. Polyvinylalkohol und Cellulosederivate infrage. Wasserlösliche natürliche oder künstliche Harze sowie Polymere als Filmbildner bzw. Bindemittel zur Erhöhung von Haft- und Abriebfestigkeit kommen ebenso in Betracht. Als pH-Regulatoren kommen organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natrium-, Kalium-, Lithiumhydroxid oder Ammoniak. Komponente (v) können auch Fette und Öle pflanzlicher und tierischer Herkunft sein, beispielsweise Rindertalg, Palmkernfett, Kokosfett, Rapsöl, Sonnenblumenöl, Leinöl, Palmöl, Sojaöl, Erdnussöl und Walöl, Baumwollsaatöl, Maisöl, Mohnöl, Olivenöl, Rizinusöl, Rüböl, Safloröl, Sojabohnenöl, Distelöl, Sonnenblumenöl, Heringöl, Sardinenöl. Auch sind die gesättigten und ungesättigten höheren Fettsäuren gängige Additive, z. B. Palmitinsäure, Cyprylsäure, Caprinsäure, Myristinsäure, Laurinsäure, Stearinsäure, Ölsäure, Linolsäure, Linolensäure, Capronsäure, Caprylsäure, Arachinsäure, Behensäure, Palmitoleinsäure, Gadoleinsäure, Erucasäure und Ricinolsäure, sowie deren Salze.

Gegenstand der vorliegenden Erfindung ist auch ein Verfahren zur Herstellung der erfindungsgemäßen Pigmentpräparationen, dadurch gekennzeichnet, dass man die Komponente (i) in Form von Pulver, Granulat oder wässrigem Presskuchen in Gegenwart von Wasser sowie der Komponente (ii) und gegebenenfalls (iii), (iv), und (v) dispergiert. Vorzugsweise werden die Komponenten (ii) und gegebenenfalls eine oder mehrere der Komponenten (iii), (iv) und (v) zunächst vermischt und homogenisiert, dann die Komponente (i) in die vorgelegte Mischung eingeführt, wobei die Komponente (i) angeteigt und vordispergiert wird. Je nach Kornhärte der Komponente (i) wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung erfolgt bis zur gewünschten Teilchengrößenverteilung und kann bei Temperaturen im Bereich von 0 bis 100 °C erfolgen, zweckmäßig bei einer Temperatur zwischen 10 und 70 °C, vorzugsweise bei 20 bis 60 °C. Im Anschluss an die Feindispergierung wird mit entionisiertem Wasser auf eine Konzentration von ca. 20 % eingestellt und mit Hilfe eines Sprühtrockners die Dispersion getrocknet. Es wird ein trockenes Pulver bzw. je nach Wahl der Trocknungsparameter ein Granulat erhalten.

Die erfindungsgemäßen trockenen Pigmentpräparationen eignen sich zum Pigmentieren und Färben von natürlichen und synthetischen Materialien aller Art, insbesondere von wässrigen Anstrichmitteln, Dispersions- und Lackfarben (Dispersionslacken) und lösungsmittelhaltigen Lacken.
Ferner eignen sich die erfindungsgemäßen Pigmentpräparationen zur Einfärbung makromolekularer Materialien aller Art, z. B. von natürlichen und synthetischen Fasermaterialien, bevorzugt Cellulosefasern, auch zur Papiermassefärbung wie zur Laminateinfärbung. Weitere Anwendungen sind die Herstellung von Druckfarben, hierbei beispielsweise Textildruck-, Flexodruck-, Dekordruck- oder Tiefdruckfarben, Tapetenfarben, wasserverdünnbaren Lacken, Holzschutzsystemen, Viskose-Spinnfärbungen, Lacken, auch Pulverlacken, Wurstdärmen, Saatgut, Düngemittel, Glas, insbesondere Glasflaschen, sowie zur Massefärbung von Dachziegeln, zur Einfärbung für Putze, Beton, Holzbeizen, Buntstiftminen, Faserschreiber, Wachse, Paraffine, Tuschen, Pasten für Kugelschreiber, Kreiden, Wasch- und Reinigungsmittel, Schuhpflegemittel, Latex-Produkten, Schleifmitteln sowie zum Einfärben von Kunststoffen bzw. hochmolekularen Materialien. Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z. B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon, Silikonharze, einzeln oder in Mischung.
Weiterhin eignen sich die erfindungsgemäßen Pigmentpräparationen zur Herstellung von Drucktinten für den Einsatz in allen konventionellen Ink-Jet-Druckern, insbesondere für solche, die auf dem Bubble-Jet- oder Piezo-Verfahren beruhen. Mit diesen Drucktinten können Papier bedruckt werden, sowie natürliche oder synthetische Fasermaterialien, Folien und Kunststoffe. Zudem können die erfindungsgemäßen Pigmentpräparationen zum Bedrucken verschiedenster Arten von beschichteten oder unbeschichteten Substratmaterialien verwendet werden, so z. B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d. h. dreidimensional gestaltet sein und sowohl vollständig oder nur teilweise bedruckt oder beschichtet werden. Die erfindungsgemäßen Pigmentpräparationen sind außerdem geeignet als Farbmittel in elektrophotographischen Tonern und Entwicklern, wie z. B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner.

Außerdem sind die erfindungsgemäßen Pigmentpräparationen als Farbmittel in Tinten, vorzugsweise Ink-Jet Tinten, wie z. B. auf wässriger oder nichtwässriger Basis ("Solvent Based"), Mikroemulsionstinten, UV-härtbare Tinten sowie in solchen Tinten, die nach dem Hot-Melt-Verfahren funktionieren, geeignet.

Außerdem können die erfindungsgemäßen Pigmentpräparationen auch als Farbmittel für Farbfilter ("Color Filtern) für "Flat Panel Displays", sowohl für die additive wie für die subtraktive Farberzeugung, ferner für "Photo-Resists", sowie als Farbmittel für elektronische Tinten ("Electronic Inks" bzw. "e-inks") oder elektronisches Papier ("Electronic Paper" bzw. "e-paper") eingesetzt werden.

### Herstellung der copolymeren Dispergiermittel (ii):

### Synthesevorschrift:

In einem Kolben mit Rührer, Rückflusskühler, Innenthermometer und Stickstoffeinleitung werden das Monomer A, Monomer B, Monomer C, Monomer D und der Molekulargewichtsregler in Lösungsmittel unter Stickstoffeinleitung in den in nachfolgender Tabelle angegebenen Gewichtsteilen vorgelegt. Dann wird die Temperatur unter Rühren auf 80 °C gebracht und innerhalb einer Stunde eine Lösung des Initiators zudosiert. Es wird noch für 2 Stunden bei dieser Temperatur weitergerührt, dann das Lösemittel im Vakuum entfernt.

Die folgenden zwei Tabellen enthalten Synthesebeispiele analog der obigen Synthesevorschrift.

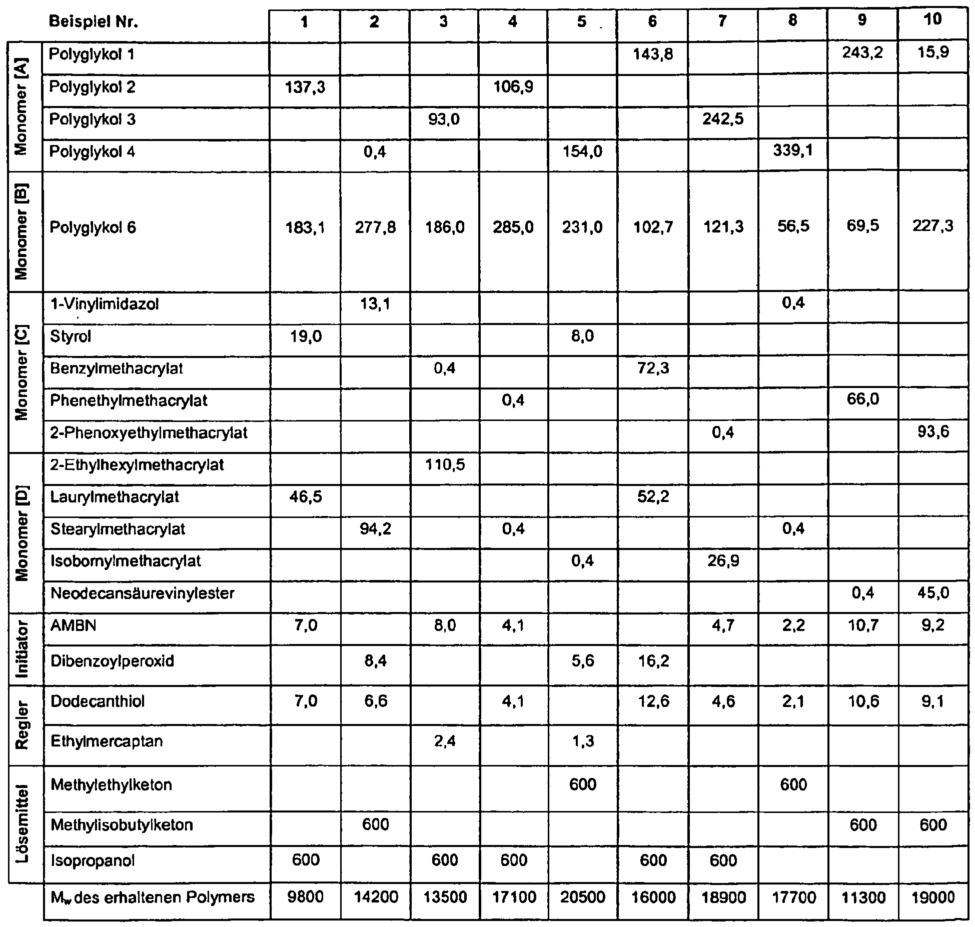

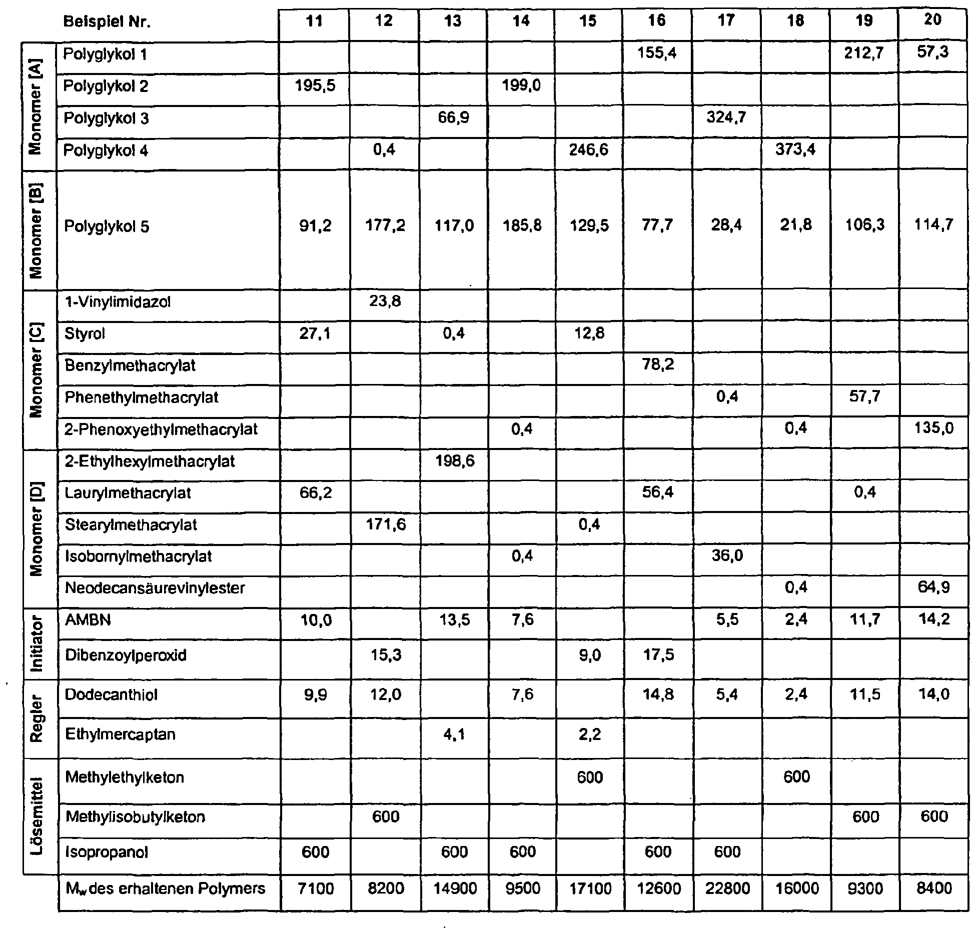

### Zusammensetzung Monomer [A]:

- Polyglykol 1: Polyalkylenglykolmonomethacrylsäureester (Formel (I), m = 2, n = 3-4; (A-O) entspricht [CH₂CH(CH₃)O)], (B-O) entspricht (CH₂CH₂O)), Molmasse ca. 350 g/mol
- Polyglykol 2: Polyalkylenglykolmonomethacrylsäureester (Formel (I), m = 2, n = 12-13; (A-O) entspricht (CH₂CH(CH₃)O)), (B-O) entspricht (CH₂CH₂O)), Molmasse ca. 750 g/mol
- Polyglykol 3: Polyalkylenglykolmonomethacrylsäureester (Formel (I), m = 2, n = 17-19; (A-O) entspricht (CH₂CH(CH₃)O)), (B-O) entspricht (CH₂CH₂O)), Molmasse ca. 1000 g/mol
- Polyglykol 4: Polyalkylenglykolmonomethacrylsäureester (Formel (I), m = 2, n = 40-42; (A-O) entspricht (CH₂CH(CH₃)O)), (B-O) entspricht (CH₂CH₂O)), Molmasse ca. 2000 g/mol

### Zusammensetzung Monomer [B]:

- Polyglykol 5: Polypropylenglykolmonomethacrylsäureester (Formel (II), o = 4-5; (D-O) entspricht [CH₂CH(CH₃)O)], Molmasse ca. 350 g/mol
- Polyglykol 6: Polypropylenglykolmonomethacrylsäureester (Formel (II), o = 15-16; (D-O) entspricht [CH₂CH(CH₃)O)], Molmasse ca. 1000 g/mol
AMBN = 2,2'-Azobis(2-methylbutyronitril)

### Herstellung einer Pigmentpräparation:

Das Pigment wurde, entweder als Pulver, Granulat oder als Presskuchen, zusammen mit dem Dispergiermittel und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurden die Mahlkörper abgetrennt, die Pigmentpräparation isoliert und mit entionisiertem Wasser auf eine Konzentration von ca. 20 % eingestellt und mit Hilfe eines Sprühtrockners der Firma Büchi (Büchi 190) getrocknet. Es wurde ein trockenes Pulver erhalten.

### Beurteilung einer Pigmentpräparation:

Die Bestimmung der Farbstärke und des Farbtons erfolgte nach DIN 55986. Geprüft wurden die wässrige Pigmentdispersion und das trockene Pulver (Farbstärke und die Verträglichkeiten mit dem einzufärbenden Medium) in einer herkömmlichen wasser-basierten Dispersionsfarbe für Innenanstriche und in einem herkömmlichen lösungsmittelhaltigen Lack. Für den "Rub-Out-Test" wurde die Farbe nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben).

Die Viskosität wurde mit einem Kegel-Platte-Viskosimeter (Roto Visco 1) der Firma Haake bei 20 °C bestimmt (Titankegel: Ø 60 mm, 1 °), wobei die Abhängigkeit der Viskosität von dem Schergefälle in einem Bereich zwischen 0 und 200 s⁻¹ untersucht wurde. Die Viskositäten wurden bei einem Schergefälle von 60 s⁻¹ gemessen.
Für eine Beurteilung der Lagerstabilität der Dispersionen wurde die Viskosität direkt nach der Herstellung der Präparation gemessen, sowie nach vierwöchiger Lagerung bei 50 °C.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der Pigmentpräparation entstehen. In dem nachfolgenden Beispiel bedeuten Teile Gewichtsteile:

### Beispiel 1

| | |
|---|---|
| 35 Teile | C.I. Pigment Gelb 74 |
| 14 Teile | Polymer aus Synthesebeispiel 11 (Tabelle) |
| 1 Teil | Benetzer |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Gelb 74 |
| 28 Teile | Polymer aus Synthesebeispiel 11 (Tabelle) |
| 2 Teile | Benetzer |

Die wässrige Pigmentpräparation hat in der Weißdispersion und im Lack eine hohe Farbstärke und ist stabil. Der Rub-Out-Test zeigt keine Farbstärkeunterschiede im Vergleich zur nachgeriebenen Fläche. Die Dispersion erweist sich als fließfähig und stabil, da sie nach 28 Tagen Lagerung bei 50 °C ebenfalls noch fließfähig ist. Die Viskosität beträgt nach der Herstellung 1,26 Pa·s. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 2

| | |
|---|---|
| 35 Teile | C.I. Pigment Rot 168 |
| 5 Teile | Polymer aus Synthesebeispiel 6 (Tabelle) |
| 10 Teile | Komponente (iv), Ethersulfat |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Rot 168 |
| 10 Teile | Polymer aus Synthesebeispiel 6 (Tabelle) |
| 20 Teile | Komponente (iv), Ethersulfat |

Die wässrige Pigmentpräparation hat in der Weißdispersion und im Lack eine hohe Farbstärke und ist stabil. Der Rub-Out-Test zeigt nur sehr geringe Farbstärkeunterschiede im Vergleich zur nachgeriebenen Fläche. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 3

| | |
|---|---|
| 35 Teile | C.I. Pigment Rot 122 |
| 5 Teile | Polymer aus Synthesebeispiel 18 (Tabelle) |
| 10 Teile | Komponente (iv), Ethersulfat |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Rot 122 |
| 10 Teile | Polymer aus Synthesebeispiel 18 (Tabelle) |
| 20 Teile | Komponente (iv), Ethersulfat |

Die wässrige Pigmentpräparation hat in der Weißdispersion und im Lack eine hohe Farbstärke und ist stabil. Der Rub-Out-Test zeigt keine
Farbstärkeunterschiede im Vergleich zur nachgeriebenen Fläche. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 4

| | |
|---|---|
| 35 Teile | C.I. Pigment Schwarz 7 |
| 14 Teile | Polymer aus Synthesebeispiel 19 (Tabelle) |
| 1 Teil | Benetzer |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Schwarz 7 |
| 28 Teile | Polymer aus Synthesebeispiel 19 (Tabelle) |
| 2 Teile | Benetzer |

Die wässrige Pigmentpräparation hat in der Weißdispersion und im Lack eine hohe Farbstärke und ist stabil. Der Rub-Out-Test zeigt keine Farbstärkeunterschiede im Vergleich zur nachgeriebenen Fläche. Die Dispersion erweist sich als fließfähig und stabil, da sie nach 28 Tagen Lagerung bei 50 °C ebenfalls noch fließfähig ist. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 5

| | |
|---|---|
| 35 Teile | C.I. Pigment Blau 15:3 |
| 5 Teile | Polymer aus Synthesebeispiel 13 (Tabelle) |
| 10 Teile | Komponente (iv), Alkoholethoxylat |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Blau 15:3 |
| 10 Teile | Polymer aus Synthesebeispiel 13 (Tabelle) |
| 20 Teile | Komponente (iv), Alkoholethoxylat |

Die wässrige Pigmentpräparation hat in der Weißdispersion und im Lack eine hohe Farbstärke und ist stabil. Der Rub-Out-Test zeigt nur sehr geringe Farbstärkeunterschiede im Vergleich zur nachgeriebenen Fläche. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 6

| | |
|---|---|
| 35 Teile | C.I. Pigment Grün 7 |
| 14 Teile | Polymer aus Synthesebeispiel 12 (Tabelle) |
| 1 Teil | Benetzer |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Grün 7 |
| 28 Teile | Polymer aus Synthesebeispiel 12 (Tabelle) |
| 2 Teile | Benetzer |

Die wässrige Pigmentpräparation hat in der Weißdispersion und im Lack eine hohe Farbstärke und ist stabil. Der Rub-Out-Test zeigt keine Farbstärkeunterschiede im Vergleich zur nachgeriebenen Fläche. Die Dispersion erweist sich als fließfähig und stabil, da sie nach 28 Tagen Lagerung bei 50 °C ebenfalls noch fließfähig ist. Das trockene Pulver lässt sich leicht in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 7

| | |
|---|---|
| 35 Teile | C.I. Pigment Blau 15 |
| 5 Teile | Polymer aus Synthesebeispiel 1 (Tabelle) |
| 10 Teile | Komponente (iv), Ethersulfat |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Blau 15 |
| 10 Teile | Polymer aus Synthesebeispiel 1,(Tabelle) |
| 20 Teile | Komponente (iv), Ethersulfat |

Die wässrige Pigmentpräparation hat in der Weißdispersion und im Lack eine hohe Farbstärke und ist stabil. Der Rub-Out-Test zeigt nur sehr geringe Farbstärkeunterschiede im Vergleich zur nachgeriebenen Fläche. Das trockene Pulver lässt sich spontan in die wasser-basierte Weißdispersion und sehr leicht in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 8

| | |
|---|---|
| 35 Teile | C.I. Pigment Rot 101 |
| 14 Teile | Polymer aus Synthesebeispiel 10 (Tabelle) |
| 1 Teil | Benetzer |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Rot 101 |
| 28 Teile | Polymer aus Synthesebeispiel 10 (Tabelle) |
| 2 Teile | Benetzer |

Die wässrige Pigmentpräparation hat in der Weißdispersion und im Lack eine hohe Farbstärke und ist stabil. Der Rub-Out-Test zeigt keine Farbstärkeunterschiede im Vergleich zur nachgeriebenen Fläche. Die Dispersion erweist sich als fließfähig und stabil, da sie nach 28 Tagen Lagerung bei 50 °C ebenfalls noch fließfähig ist. Das trockene Pulver lässt sich leicht und spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 9

| | |
|---|---|
| 35 Teile | C.I. Pigment Gelb 42 |
| 5 Teile | Polymer aus Synthesebeispiel 16 (Tabelle) |
| 10 Teile | Komponente (iv), Phosphorether |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Gelb 42 |
| 10 Teile | Polymer aus Synthesebeispiel 16 (Tabelle) |
| 20 Teile | Komponente (iv), Phosphorether |

Die wässrige Pigmentpräparation hat in der Weißdispersion und im Lack eine hohe Farbstärke und ist stabil. Der Rub-Out-Test zeigt nur sehr geringe Farbstärkeunterschiede im Vergleich zur nachgeriebenen Fläche. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 10

| | |
|---|---|
| 35 Teile | C.I. Pigment Violet 23 |
| 14 Teile | Polymer aus Synthesebeispiel 3 (Tabelle) |
| 1 Teil | Benetzer |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Violet 23 |
| 28 Teile | Polymer aus Synthesebeispiel 3 (Tabelle) |
| 2 Teile | Benetzer |

Die wässrige Pigmentpräparation hat in der Weißdispersion und im Lack eine hohe Farbstärke und ist stabil. Der Rub-Out-Test zeigt keine Farbstärkeunterschiede im Vergleich zur nachgeriebenen Fläche. Die Dispersion erweist sich als fließfähig und stabil, da sie nach 28 Tagen Lagerung bei 50 °C ebenfalls noch fließfähig ist. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 11

| | |
|---|---|
| 35 Teile | C.I. Pigment Gelb 97 |
| 5 Teile | Polymer aus Synthesebeispiel 2 (Tabelle) |
| 10 Teile | Komponente (iv), Ethersulfat |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Gelb 97 |
| 10 Teile | Polymer aus Synthesebeispiel 2 (Tabelle) |
| 20 Teile | Komponente (iv), Ethersulfat |

Die wässrige Pigmentpräparation hat in der Weißdispersion und im Lack eine hohe Farbstärke und ist stabil. Der Rub-Out-Test zeigt nur sehr geringe Farbstärkeunterschiede im Vergleich zur nachgeriebenen Fläche. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 12

| | |
|---|---|
| 35 Teile | C.I. Pigment Rot 112 |
| 14 Teile | Polymer aus Synthesebeispiel 8 (Tabelle) |
| 1 Teil | Benetzer |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Rot 112 |
| 28 Teile | Polymer aus Synthesebeispiel 8 (Tabelle) |
| 2 Teile | Benetzer |

Die wässrige Pigmentpräparation hat in der Weißdispersion und im Lack eine hohe Farbstärke und ist stabil. Der Rub-Out-Test zeigt keine Farbstärkeunterschiede im Vergleich zur nachgeriebenen Fläche. Die Dispersion erweist sich als fließfähig und stabil, da sie nach 28 Tagen Lagerung bei 50 °C ebenfalls noch fließfähig ist. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 13

| | |
|---|---|
| 35 Teile | C.I. Pigment Grün 50 |
| 5 Teile | Polymer aus Synthesebeispiel 4 (Tabelle) |
| 10 Teile | Komponente (iv), Alkoholethoxylat |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Grün 50 |
| 10 Teile | Polymer aus Synthesebeispiel 4 (Tabelle) |
| 20 Teile | Komponente (iv), Alkoholethoxylat |

Die wässrige Pigmentpräparation hat in der Weißdispersion und im Lack eine hohe Farbstärke und ist stabil. Der Rub-Out-Test zeigt nur sehr geringe Farbstärkeunterschiede im Vergleich zur nachgeriebenen Fläche. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 14

| | |
|---|---|
| 35 Teile | C.I. Pigment Schwarz 33 |
| 14 Teile | Polymer aus Synthesebeispiel 20 (Tabelle) |
| 1 Teil | Benetzer |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Schwarz 33 |
| 28 Teile | Polymer aus Synthesebeispiel 20 (Tabelle) |
| 2 Teile | Benetzer |

Die wässrige Pigmentpräparation hat in der Weißdispersion und im Lack eine hohe Farbstärke und ist stabil. Der Rub-Out-Test zeigt keine Farbstärkeunterschiede im Vergleich zur nachgeriebenen Fläche. Die Dispersion erweist sich als fließfähig und stabil, da sie nach 28 Tagen Lagerung bei 50 °C ebenfalls noch fließfähig ist. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

### Beispiel 15

| | |
|---|---|
| 35 Teile | C.I. Pigment Weiß 6 |
| 5 Teile | Polymer aus Synthesebeispiel 9 (Tabelle) |
| 10 Teile | Komponente (iv), ethoxyliertes Amin |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Weiß 6 |
| 10 Teile | Polymer aus Synthesebeispiel 9 (Tabelle) |
| 20 Teile | Komponente (iv), ethoxyliertes Amin |

Die wässrige Pigmentpräparation hat in der Weißdispersion und im Lack eine hohe Farbstärke und ist stabil. Der Rub-Out-Test zeigt nur sehr geringe Farbstärkeunterschiede im Vergleich zur nachgeriebenen Fläche. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

## Patentansprüche

1. Pigmentpräparation, enthaltend
(i) mindestens ein organisches und/oder anorganisches Pigment,
(ii) ein Dispergiermittel, erhältlich durch Polymerisation der Monomere [A], [B], [C] und [D], wobei
[A] ein Monomer der Formel (I) 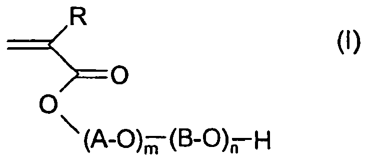 A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid -Einheiten stehen, wobei der molare Anteil der Ethylenoxid-Einheiten 50-98%, bezogen auf die Summe der Ethylen- und Propylenoxid-Einheiten, beträgtxid-Einheiten 50 bis 98%, bezogen auf die Summe der Ethylen-und Propylenoxid-Einheiten, beträgt;
R für Wasserstoff oder Methyl steht,
m eine Zahl von 1 bis 500 ist;
n eine Zahl von 1 bis 500 ist,
wobei die Summe m + n gleich 2 bis 1000 ist;
[B] ein Monomer der Formel (II) 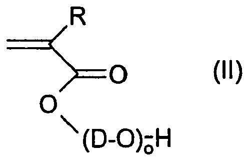 wobei
D für C₃-Alkylen und
R für Wasserstoff oder Methyl steht,
o eine Zahl von 2 bis 500 ist;
[C] ein ethylenisch ungesättigtes Monomer ist, das eine aromatische Gruppe enthält; und eine Verbindung der Formel (IIIa) oder (IIIb) ist: 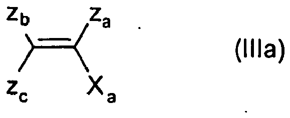 wobei
Xₐ für einen aromatischen oder araliphatischen Rest mit 3 bis 30 C-Atomen steht, der gegebenenfalls Heteroatome aus der Gruppe N, O und S enthält,
Zₐ für H oder (C₁-C₄)-Alkyl steht,
Z_{b} für H oder (C₁-C₄)-Alkyl steht, und
Z_{c} für H oder (C₁-C₄)-Alkyl steht; 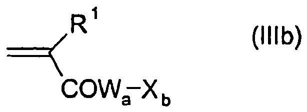
wobei
R¹ für Wasserstoff oder Methyl steht,
X_{b} für einen aromatischen oder araliphatischen Rest mit 3 bis 30 C-Atomen steht, der gegebenenfalls Heteroatome aus der Gruppe N, O und S enthält,
Wₐ für Sauerstoff oder die Gruppe NH steht
[D] ein ethylenisch ungesättigtes Monomer ist, das einen Alkylrest enthält, und eine Verbindung der Formel (IV) ist: 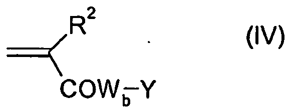
R² für Wasserstoff oder Methyl steht,
Y für einen aliphatischen Kohlenwasserstoffrest mit 1 bis 30 C-Atomen steht, der linear oder verzweigt, oder auch cyclisch sein kann, und Heteroatome aus der Gruppe O, N und S enthalten kann, sowie ungesättigt sein kann,
W_{b} für Sauerstoff oder die Gruppe NH steht.

2. Pigmentpräparation nach Anspruch 1, enthaltend im trockenen Zustand 30 bis 90 Gew.-% an Komponente (i).

3. Pigmentpräparation nach Anspruch 1 oder 2, enthaltend im trockenen Zustand 0,1 bis 30 Gew.-% an Komponente (ii).

4. Pigmentpräparation nach mindestens einem der Ansprüche 1 bis 3, enthaltend an
Komponente (i) 60 bis 85 Gew.-%,
Komponente (ii) 10 bis 30 Gew.-%,
jeweils bezogen auf das Gesamtgewicht der trockenen Pigmentpräparation.

5. Pigmentpräparation nach mindestens einem der Ansprüche 1 bis 4, **dadurch gekennzeichnet, dass** das organische Pigment ein Monoazo-, Disazo-, verlacktes Azo-, β-Naphthol-, Naphthol AS-, Benzimidazolon-, Disazokondensations-, Azo-Metallkomplex-Pigment, Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- oder Diketopyrrolopyrrol-Pigment oder ein Ruß ist.

6. Pigmentpräparation nach mindestens einem der Ansprüche 1 bis 5, **dadurch gekennzeichnet, dass** die Alkylenoxideinheiten (A-O)ₘ und (B-O)ₙ des Monomeren [A] blockartig angeordnet vorliegen.

7. Verfahren zur Herstellung einer Pigmentpräparation nach einem oder mehreren der Ansprüche 1 bis 6, **dadurch gekennzeichnet, dass** man die Komponente (i) in Form von Pulver, Granulat oder wässrigem Presskuchen in Gegenwart von Wasser sowie der Komponente (ii) dispergiert und anschließend gegebenenfalls trocknet.

8. Verwerdung einer Pigmentpräparation nach einem oder mehreren der Ansprüche 1 bis 6 zum Pigmentieren und Färben von natürlichen und synthetischen Materialien.

9. Verwendung nach Anspruch 8 zum Pigmentieren von wässrigen Anstrichmitteln, Dispersions- und Lackfarben, und lösungsmittelhaltigen Lacken.

## Claims

1. A pigment formulation containing
(i) at least one organic and/or inorganic pigment,
(ii) a dispersant obtainable by polymerization of monomers [A] , [B], [C] and [D], where
[A] is a monomer of the formula (I) 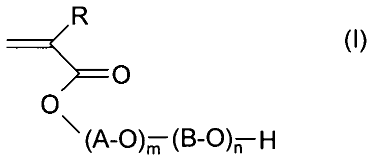 where
(A-O)ₘ represents propylene oxide units and (B-O)ₙ represents ethylene oxide units, or (A-O)ₘ represents ethylene oxide units and (B-O)ₙ represents propylene oxide units, the molar fraction of ethylene oxide units being 50 to 98%, based on the sum total of ethylene and propylene oxide units;
R represents hydrogen or methyl,
m is from 1 to 500;
n is from 1 to 500,
subject to the proviso that the sum m + n equals 2 to 1000;
[B] is a monomer of the formula (II) 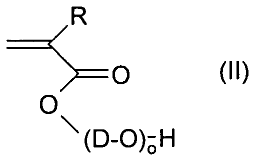 where
D represents C₃-alkylene and
R represents hydrogen or methyl,
o is from 2 to 500;
[C] is an ethylenically unsaturated monomer which contains an aromatic group; and is a compound of the formula (IIIa) or (IIIb): 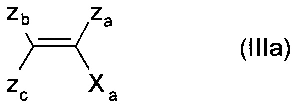 where
Xₐ represents an aromatic or araliphatic radical having 3 to 30 carbon atoms which optionally contains heteroatoms from the group consisting of N, O and S,
Zₐ represents H or (C₁-C₄)-alkyl,
Z_{b} represents H or (C₁-C₄)-alkyl, and
Z_{c} represents H or (C₁-C₄)-alkyl; 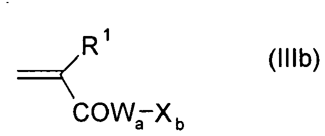
where
R¹ represents hydrogen or methyl,
X_{b} represents an aromatic or araliphatic radical having 3 to 30 carbon atoms which optionally contains heteroatoms from the group consisting of N, O and S,
Wₐ represents oxygen or an NH group,BR [D]is an ethylenically unsaturated monomer which contains an alkyl radical, and is a compound of the formula (IV) : 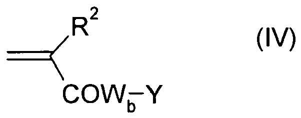
R² represents hydrogen or methyl,
Y represents an aliphatic hydrocarbyl radical having 1 to 30 carbon atoms, which may be linear or branched or else cyclic, and which may contain heteroatoms from the group consisting of O, N and S, and may also be unsaturated,
W_{b} represents oxygen or an NH group.

2. The pigment formulation as claimed in claim 1, containing in the dry state from 30% to 90% by weight of component (i).

3. The pigment formulation as claimed in claim 1 or 2, containing in the dry state from 0.1% to 30% by weight of component (ii).

4. The pigment formulation as claimed in at least one of claims 1 to 3, containing by way of
component (i) 60% to 85% by weight,
component (ii) 10% to 30% by weight,
all based on the total weight of the dry pigment formulation.

5. The pigment formulation as claimed in at least one of claims 1 to 4, wherein the organic pigment is a monoazo, disazo, laked azo, β-naphthol, Naphthol AS, benzimidazolone, disazo condensation, azo metal complex pigment, phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline or diketopyrrolopyrrole pigment or a carbon black.

6. The pigment formulation as claimed in at least one of claims 1 to 5, wherein the alkylene oxide units (A-O)ₘ and (B-O)ₙ of the [A] monomer are present in a blocklike arrangement.

7. A process for preparing a pigment formulation as claimed in one or more of claims 1 to 6, which comprises component (i) in the form of powder, granulate or aqueous presscake being dispersed in the presence of water and also of component (ii) and subsequently dried, if appropriate.

8. The use of a pigment formulation as claimed in one or more of claims 1 to 6 for pigmenting and dyeing natural and synthetic materials.

9. The use as claimed in claim 8 for pigmenting aqueous paints, emulsion and varnish colors, and solvent-containing varnishes.

## Revendications

1. Préparation pigmentaire, contenant
(i) au moins un pigment organique et/ou inorganique,
(ii) un dispersant, pouvant être obtenu par polymérisation des monomères [A], [B], [C] et [D], où
[A] représente un monomère de formule (I) 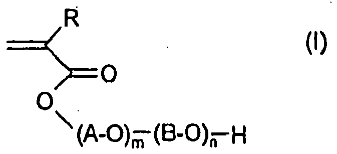 où
(A-O)ₘ représente des unités d'oxyde de propylène et (B-O)ₙ des unités d'oxyde d'éthylène, ou (A-O)ₘ représente des unités d'oxyde d'éthylène et (B-O)ₙ représente des unités d'oxyde de propylène, la proportion molaire des unités d'oxyde d'éthylène valant 50 à 98%, par rapport à la somme des unités d'oxyde d'éthylène et d'oxyde de propylène ;
R représente hydrogène ou méthyle,
m vaut un nombre de 1 à 500 ;
n vaut un nombre de 1 à 500,
la somme de m + n étant égale à 2 à 1000 ;
[B] représente un monomère de formule (II) 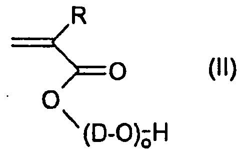 où
D représente C₃-alkylène et
R représente hydrogène ou méthyle,
o représente un nombre de 2 à 500 ;
[C] représente un monomère éthyléniquement insaturé qui contient un groupe aromatique, et est un composé de formule (IIIa) ou (IIIb) 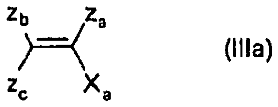
où
Xₐ représente un radical aromatique ou araliphatique comprenant 3 à 30 atomes de carbone, qui contient le cas échéant des hétéroatomes du groupe formé par N, O et S,
Zₐ représente H ou (C₁-C₄) -alkyle,
Z_{b} représente H ou (C₁-C₄) -alkyle, et
Z_{c} représente H ou (C₁-C₄) -alkyle ; 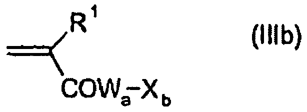
où
R¹ représente hydrogène ou méthyle,
X_{b} représente un radical aromatique ou araliphatique comprenant 3 à 30 atomes de carbone, qui contient le cas échéant des hétéroatomes du groupe formé par N, O et S,
Wₐ représente oxygène ou le groupe NH
[D] représente un monomère éthyléniquement insaturé qui contient un radical alkyle et est un composé de formule (IV) 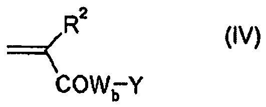
R² représente hydrogène ou méthyle,
Y représente un radical hydrocarboné aliphatique comprenant 1 à 30 atomes de carbone, qui peut être linéaire ou ramifié ou également cyclique et qui peut contenir des hétéroatomes du groupe formé par O, N et S et qui peut également être insaturé,
W_{b} représente oxygène ou le groupe NH.

2. Préparation pigmentaire selon la revendication 1, contenant, à l'état sec, 30 à 90% en poids de composant (i).

3. Préparation pigmentaire selon la revendication 1 ou 2, contenant, à l'état sec, 0,1 à 30% en poids de composant (ii).

4. Préparation pigmentaire selon au moins l'une quelconque des revendications 1 à 3, contenant
en composant (i) 60 à 85% en poids
en composant (ii) 10 à 30% en poids
à chaque fois par rapport au poids total de la préparation pigmentaire sèche.

5. Préparation pigmentaire selon au moins l'une quelconque des revendications 1 à 4, **caractérisée en ce que** le pigment organique est un pigments monoazo, diazo, azo laqué, β-naphtol, naphtol AS, benzimidazolone, diazo-condensation, azo-complexe métallique, phtalocyanine, quinacridone, pérylène, périnone, thio-indigo, anthanthrone, anthraquinone, flavanthrone, indanthrone, isoviolanthrone, pyranthrone, dioxazine, quinophtalone, iso-indolinone, iso-indoline ou dicétopyrrolopyrrole ou une suie.

6. Préparation pigmentaire selon au moins l'une quelconque des revendications 1 à 5, **caractérisée en ce que** les unités d'oxyde d'alkylène (A-O)ₘ et (B-O)ₙ du monomère [A] sont disposées en blocs.

7. Procédé pour la préparation d'une préparation pigmentaire selon l'une ou plusieurs des revendications 1 à 6, **caractérisé en ce qu'**on disperse le composant (i) sous forme de poudre, de granulat ou de gâteau comprimé aqueux en présence d'eau ainsi que du composant (ii), puis on sèche.

8. Utilisation d'une préparation pigmentaire selon l'une ou plusieurs des revendications 1 à 6 pour pigmenter et colorer des matériaux naturels ou synthétiques.

9. Utilisation selon la revendication 8 pour la pigmentation de peintures, de laques en dispersion et de vernis aqueux et de laques contenant des solvants.
